# EUROPÄISCHE PATENTSCHRIFT

(11) **EP 4 305 342 B1**
(45) Veröffentlichungstag und Bekanntmachung des Hinweises auf die Patenterteilung: **06.05.2026**
(21) Anmeldenummer: 22711478.2
(22) Anmeldetag: 02.03.2022
(51) Int. Cl.: F21V 8/00, G02B 27/00, G02B 27/01, E06B 9/28

(54) **ANZEIGEVORRICHTUNG MIT DEFEKTDETEKTION FÜR ENTSPIEGELUNGSLAMELLEN**
DISPLAY DEVICE WITH INTEGRATED DEFECT DETECTION FOR LOUVERED BLIND LAMELLAE
DISPOSITIF D'AFFICHAGE À DÉTECTION DE DÉFAUTS INTÉGRÉE POUR LAMELLES DE STORE À PERSIENNES

(30) Priorität: 10.03.2021 DE 102021202346
(43) Veröffentlichungstag der Anmeldung: 17.01.2024
(73) Patentinhaber: AUMOVIO Germany GmbH, 60488 Frankfurt am Main (DE)
(72) Erfinder: WILLE, Felicitas, 60488 Frankfurt am Main (DE); MÜLLER, Oliver, 60488 Frankfurt am Main (DE); DÖBLER, Michael, 60488 Frankfurt am Main (DE); HEBESTREIT, Bjoern, 60488 Frankfurt am Main (DE)
(74) Vertreter: Aumovio Corporation
(86) Internationale Anmeldenummer: PCT/DE2022/200031
(87) Internationale Veröffentlichungsnummer: WO 2022/188930

(56) Entgegenhaltungen:
- WO-A1-2007/048161
- DE-A1- 102015 224 939
- DE-A1- 102018 213 061
- DE-T5- 112018 003 725
- JP-A- 2006 323 567
- JP-A- H0 921 278
- US-A1- 2018 081 167

## Beschreibung

Die vorliegende Erfindung betrifft eine Defektdetektion für Entspiegelungslamellen einer Anzeigevorrichtung mit einer bildgebenden Einheit mit einem Anzeigeelement zum Anzeigen eines Bildes und einer Optikeinheit zum Projizieren des Bildes auf eine Projektionsfläche.

Derartige Anzeigevorrichtungen können beispielsweise für ein Head-Up-Display für ein Fortbewegungsmittel verwendet werden. Unter einem Head-Up-Display, auch als HUD bezeichnet, wird ein Anzeigesystem verstanden, bei dem der Betrachter seine Blickrichtung beibehalten kann, da die darzustellenden Inhalte in sein Sichtfeld eingeblendet werden. Während derartige Systeme aufgrund ihrer Komplexität und Kosten ursprünglich vorwiegend im Bereich der Luftfahrt Verwendung fanden, werden sie inzwischen auch im Automobilbereich in Großserie verbaut.

Head-Up-Displays bestehen im Allgemeinen aus einem Bildgenerator, einer Optikeinheit und einer Spiegeleinheit. Der Bildgenerator erzeugt das Bild. Die Optikeinheit leitet das Bild auf die Spiegeleinheit. Der Bildgenerator wird oft auch als bildgebende Einheit oder PGU (Picture Generating Unit) bezeichnet. Die Spiegeleinheit ist eine teilweise spiegelnde, lichtdurchlässige Scheibe. Der Betrachter sieht also die vom Bildgenerator dargestellten Inhalte als virtuelles Bild und gleichzeitig die reale Welt hinter der Scheibe. Als Spiegeleinheit dient im Automobilbereich oftmals die Windschutzscheibe, deren gekrümmte Form bei der Darstellung berücksichtigt werden muss. Durch das Zusammenwirken von Optikeinheit und Spiegeleinheit ist das virtuelle Bild eine vergrößerte Darstellung des vom Bildgenerator erzeugten Bildes.

Der Betrachter kann das virtuelle Bild nur aus der Position der sogenannten Eyebox betrachten. Als Eyebox wird ein Bereich bezeichnet, dessen Höhe und Breite einem theoretischen Sichtfenster entspricht. So lange sich ein Auge des Betrachters innerhalb der Eyebox befindet, sind alle Elemente des virtuellen Bildes für das Auge sichtbar. Befindet sich das Auge hingegen außerhalb der Eyebox, so ist das virtuelle Bild für den Betrachter nur noch teilweise oder gar nicht sichtbar. Je größer die Eyebox ist, desto weniger eingeschränkt ist der Betrachter somit bei der Wahl seiner Sitzposition.

Die Größe der Eyebox herkömmlicher Head-Up-Displays wird durch die Größe der Optikeinheit begrenzt. Ein Ansatz zur Vergrößerung der Eyebox besteht darin, das von der bildgebenden Einheit kommende Licht in einen Lichtwellenleiter einzukoppeln. Das in den Lichtwellenleiter eingekoppelte Licht wird an dessen Grenzflächen totalreflektiert und wird somit innerhalb des Lichtwellenleiters geleitet. Zusätzlich wird an einer Vielzahl von Positionen entlang der Ausbreitungsrichtung jeweils ein Teil des Lichts ausgekoppelt. Durch den Lichtwellenleiter erfolgt auf diese Weise eine Aufweitung der Austrittspupille. Die effektive Austrittspupille setzt sich hier aus Bildern der Apertur des Bilderzeugungssystems zusammen.

Vor diesem Hintergrund beschreibt die US 2016/0124223 A1 eine Anzeigevorrichtung für virtuelle Bilder. Die Anzeigevorrichtung umfasst einen Lichtwellenleiter, der bewirkt, dass von einer bildgebenden Einheit kommendes Licht, das durch eine erste Lichteinfallsfläche einfällt, wiederholt einer internen Reflexion unterzogen wird, um sich in einer ersten Richtung von der ersten Lichteinfallsfläche weg zu bewegen. Der Lichtwellenleiter bewirkt zudem, dass ein Teil des im Lichtwellenleiter geführten Lichts durch Bereiche einer ersten Lichtaustrittsfläche, die sich in der ersten Richtung erstreckt, nach außen austritt. Die Anzeigevorrichtung umfasst weiterhin ein erstes lichteinfallseitiges Beugungsgitter, das auftreffendes Licht beugt, um zu bewirken, dass das gebeugte Licht in den Lichtwellenleiter eintritt, und ein erstes lichtausfallendes Beugungsgitter, das vom Lichtwellenleiter einfallendes Licht beugt. Auch die US 2012/0224062 A1 zeigt eine Anzeigevorrichtung für virtuelle Bilder mit einem Lichtwellenleiter,

Bei der aktuell bekannten Auslegung eines derartigen Geräts, bei dem der Lichtwellenleiter aus Glasplatten besteht, innerhalb derer Beugungsgitter oder Hologramme angeordnet sind, tritt ein Problem auf, falls von außen Licht einfällt. Durch Reflexionen des von außen einfallenden Lichts kann Störlicht in das Auge des Benutzers fallen. Zudem wird der Kontrast des vom Benutzer wahrgenommenen virtuellen Bildes reduziert.

Bei herkömmlichen Geräten werden deshalb möglicherweise reflektierende Komponenten verkippt und mit Strahlfallen kombiniert, sodass Reflexe den Bereich, in dem das Fahrerauge erwartet wird, nicht erreichen. Alternativ werden Antireflexbeschichtungen verwendet und Strukturrauigkeiten genutzt, um die Reflexintensität zu vermindern.

Das Verkippen der Komponenten kostet erheblich Bauraum, der in Automobilen begrenzt ist. Außerdem ist die Performance der Komponenten bei verkipptem Einbau in der Regel gemindert. Schichten und Strukturen verringern die erreichbare Intensität, die Reflexe bleiben in der Regel aber deutlich sichtbar und verringern den Kontrast erheblich.

Aus der DE 10 2018 213 061 A1 ist ein Gerät zum Generieren eines virtuellen Bildes bekannt mit einem Anzeigeelement zum Erzeugen eines Bildes, einem Lichtwellenleiter zum Aufweiten einer Austrittspupille und einem dem Lichtwellenleiter im Strahlengang nachgeordneten Blendschutzelement, welches als Lamellen aufweisende Jalousie ausgebildet ist. Aus der JP 2017-165 163 A ist ein Head-Up-Display bekannt, bei dem ebenfalls im Betrieb feststehende Lamellen zum Einsatz kommen.

Aus der DE 10 2015 224 939 A1 ist ein Gerät gemäß Oberbegriff des Anspruchs 1 bekannt. Aus der JP H09 21278 A ist es bekannt, defekte Bauteile einer Vorrichtung mittels eines unterbrochenen Stromkreises zu detektieren.

Es ist eine Aufgabe der vorliegenden Erfindung, ein verbessertes Gerät zum Generieren eines virtuellen Bildes vorzuschlagen, bei dem der Einfluss von Störlicht reduziert ist.

Diese Aufgabe wird durch ein Gerät mit den Merkmalen des Anspruchs 1 gelöst. Bevorzugte Ausgestaltungen der Erfindung sind Gegenstand der abhängigen Ansprüche.

Ein erfindungsgemäßes Gerät zum Generieren eines virtuellen Bildes weist auf
- ein Anzeigeelement zum Erzeugen eines Bildes; und
- ein Blendschutzelement welches als Lamellen aufweisende Jalousie ausgebildet ist, wobei
- die Lamellen außerhalb eines Sichtbereichs des Geräts in einer Vorspanneinrichtung eingespannt sind, und an einem Kontaktierungselement unter Vorspannung anliegen. Dies hat den Vorteil, dass eine Defektdetektion einer Lamelle über das Kontaktierungselement ermöglicht ist. Eine defekte Lamelle, die zum Teil eingerissen oder komplett gerissen ist, weist keine Spannung auf und verliert somit den Kontakt zum Kontaktierungselement. Fehlender Kontakt zeigt einen Defekt an, währen bei bestehendem Kontakt eine intakte Lamelle vorliegt. Vorteilhaft sind Vorspanneinrichtung und Kontaktierungselement außerhalb des Sichtbereichs des Geräts angeordnet, was eine Beeinträchtigung des Strahlengangs und somit des virtuellen Bildes durch diese Elemente verhindert.

Das Kontaktierungselement ist eine Feder, die elektrisch leitend ausgebildet ist, die in einem gespannten Zustand beziehungsweise in einem Ruhezustand mit einem Anschlagpol in elektrischer Verbindung steht und im entsprechend anderen Zustand vom Anschlagpol elektrisch getrennt ist. Die Feder besteht dabei beispielsweise aus Metall oder aus einem elektrisch nicht oder nur schlecht leitendem Material, welches mit einer elektrisch leitfähigen Schicht oder einem elektrisch leitfähigen Bereich versehen ist. Ein Vorteil dieser Lösung besteht darin, dass die Defektdetektion nicht direkt über die Lamelle erfolgt, sondern mittels eines separaten Elements, welches über die Vorspannung der Lamelle betätigt wird. Es sind somit keine speziellen Maßnahmen zur Ausgestaltung oder Materialwahl für die Lamelle erforderlich.

Vorteilhaft weist das Gerät einen Lichtwellenleiter zum Aufweiten einer Austrittspupille auf, dem das Blendschutzelement nachgeordnet ist.

Vorteilhaft ist die Lamelle zumindest in einem außerhalb des Sichtbereichs des Geräts befindlichen Lamellenbereich elektrisch leitfähig ausgebildet. Dies hat den Vorteil, dass die Lamelle selbst einen elektrischen Kontakt herstellt, vorzugsweise zwischen der Vorspanneinrichtung und dem Kontaktierungselement. Dabei kann die Lamelle auf ihrer gesamten Länge elektrisch leitfähig ausgebildet sein. Die Lamelle kann beispielsweise aus einem elektrisch leitfähigen Material bestehen, wie beispielsweise einem elektrisch leitfähigen Kunststoff, einer Metallfolie oder einem anderen geeigneten elektrisch leitenden Material. Die Lamelle kann aber auch mit einem entsprechend leitfähigen Material beschichtet sein. Vorzugsweise ist die Lamelle nur in ihrem außerhalb des Sichtbereichs des Geräts liegenden Teil elektrisch leitfähig ausgebildet. In diesem Fall treten keine durch die elektrische Leitfähigkeit hervorgerufenen Beeinträchtigungen des Strahlengangs im Sichtbereich auf. Eine solche Beeinträchtigung könnte beispielsweise bei der Verwendung einer metallischen Beschichtung auftreten, welche zu unerwünschten Reflexionen führen kann, wenn sich diese im Sichtbereich befindet.

Vorteilhaft ist die Lamelle auf ihrer dem Kontaktierungselement abgewandten Seite elektrisch isolierend ausgebildet. Selbst wenn bei Abriss einer Lamelle diese mit einem benachbart angeordneten Kontaktelement in Berührung kommt, wird in diesem Fall kein elektrischer Kontakt hergestellt, ein fehlerhaftes Signal wird vermieden.

Vorteilhaft sind Vorspanneinrichtung und Kontaktierungselement in einer Richtung senkrecht zur längsten Ausdehnung einer Lamelle versetzt angeordnet. Die Lamelle wird somit auch in einer Richtung senkrecht zur durch die Vorspanneinrichtung hervorgerufenen Vorspannung vorgespannt. Damit wird der Anpressdruck der Lamelle an das Kontaktierungselement erhöht, was die Zuverlässigkeit des elektrischen Kontakts und somit der Defektdetektion erhöht. Auch kann die durch die Vorspanneinrichtung ausgeübte Vorspannung nur sehr gering ausgelegt werden, sodass erst die durch die versetzte Anordnung von Vorspanneinrichtung und Kontaktierungselement hervorgerufene Spannung die tatsächlich im Betrieb anliegende Vorspannung in Richtung der längsten Ausdehnung der Lamelle festlegt. Die Vorspanneinrichtung wirkt in diesem Fall wie eine reine Halteeinrichtung, welche selbst keine besondere Vorspannung ausübt.

Vorteilhaft ist das Kontaktierungselement ein Verstellmechanismus zum Verändern des Anstellwinkels der Lamellen. Dies hat den Vorteil, dass kein separates Kontaktierungselement erforderlich ist, sondern dessen Funktion durch einen in vielen Fällen ohnehin vorgesehenen Verstellmechanismus mit übernommen wird. Die Anzahl erforderlicher Bauteile wird somit reduziert.

Ein erfindungsgemäßes Gerät weist vorteilhaft eine elektrische Auswerteschaltung auf, mit der mehrere Lamellen gemeinsam überwacht werden. Dies hat den Vorteil, den Schaltungsaufwand gering zu halten.

Vorteilhaft ist die Vorspanneinrichtung und/oder das Kontaktierungselement mit einem elektrisch leitfähigen Kleber versehen. Auf diese Weise kann der elektrische Kontakt zur Lamelle beziehungsweise zu einer Kontaktierung ohne großen Aufwand hergestellt werden.

Weitere Merkmale der vorliegenden Erfindung werden aus der nachfolgenden Beschreibung und den angehängten Ansprüchen in Verbindung mit den Figuren ersichtlich.

### Figurenübersicht

- Fig. 1: zeigt schematisch ein Head-Up-Display gemäß dem Stand der Technik für ein Kraftfahrzeug;
- Fig. 2: zeigt einen Lichtwellenleiter mit zweidimensionaler Vergrößerung;
- Fig. 3: zeigt schematisch ein Head-Up-Display mit Lichtwellenleiter;
- Fig. 4: zeigt schematisch ein Head-Up-Display mit Lichtwellenleiter in einem Kraftfahrzeug;
- Fig. 5: zeigt schematisch ein Head-Up-Display mit Lichtwellenleiter und einer Entspiegelung als Blendschutzelement;
- Fig. 6: zeigt einen alternativen Lichtwellenleiter mit zweidimensionaler Vergrößerung;
- Fig. 7: zeigt schematisch ein Gerät zum Generieren eines virtuellen Bildes;
- Fig. 8: zeigt eine Jalousie sowie eine Ausschnittsvergrößerung davon;
- Fig. 9: zeigt Schnittdarstellung des Blendschutzelements in Draufsicht;
- Fig. 10: zeigt eine Lösung zur Defektdetektion von Lamellen, die nicht unter die Definition des Anspruchs 1 fällt.
- Fig. 11: zeigt einen Verstellmechanismus;
- Fig. 12: zeigt die Lösung aus Figur 10 in Draufsicht;
- Fig. 13: zeigt eine erfindungsgemäße Lösung mit einer Feder;
- Fig. 14: zeigt eine erfindungsgemäße Lösung mit einer Feder;
- Fig. 15: zeigt eine elektrische Auswerteschaltung;
- Fig. 16: zeigt ein Blendschutzelement in Draufsicht;
- Fig. 17: zeigt ein Blendschutzelement;
- Fig. 18: zeigt eine schematische räumliche Darstellung einer Vorspanneinrichtung;
- Fig. 19: zeigt eine als Feder ausgebildete Vorspanneinrichtung:
- Fig. 20: zeigt Ausführungsvarianten;
- Fig. 21: zeigt eine weitere Ausführungsvariante.

### Figurenbeschreibung

Zum besseren Verständnis der Prinzipien der vorliegenden Erfindung werden nachfolgend Ausführungsformen der Erfindung anhand der Figuren detaillierter erläutert. Gleiche Bezugszeichen werden in den Figuren für gleiche oder gleichwirkende Elemente verwendet und nicht notwendigerweise zu jeder Figur erneut beschrieben. Es versteht sich, dass sich die Erfindung nicht auf die dargestellten Ausführungsformen beschränkt und dass die beschriebenen Merkmale auch kombiniert oder modifiziert werden können, ohne den Schutzbereich der Erfindung zu verlassen, wie er in den angehängten Ansprüchen definiert ist.

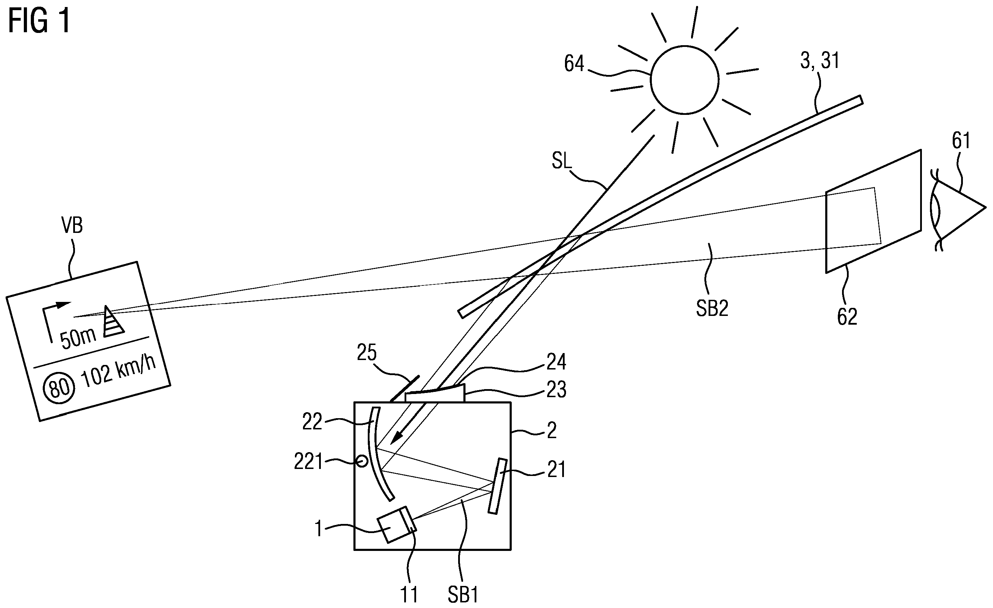

Zunächst soll anhand der Figuren 1 bis 4 der Grundgedanke eines Head-Up-Displays mit Lichtwellenleiter dargelegt werden.

Fig. 1 zeigt eine Prinzipskizze eines Head-Up-Displays gemäß dem Stand der Technik für ein Kraftfahrzeug. Das Head-Up-Display weist einen Bildgenerator 1, eine Optikeinheit 2 und eine Spiegeleinheit 3 auf. Von einem Anzeigeelement 11 geht ein Strahlenbündel SB1 aus, welches von einem Faltspiegel 21 auf einen gekrümmten Spiegel 22 reflektiert wird, der es Richtung Spiegeleinheit 3 reflektiert. Die Spiegeleinheit 3 ist hier als Windschutzscheibe 31 eines Kraftfahrzeugs dargestellt. Von dort gelangt das Strahlenbündel SB2 in Richtung eines Auges 61 eines Betrachters.

Der Betrachter sieht ein virtuelles Bild VB, welches sich außerhalb des Kraftfahrzeugs oberhalb der Motorhaube oder sogar vor dem Kraftfahrzeug befindet. Durch das Zusammenwirken von Optikeinheit 2 und Spiegeleinheit 3 ist das virtuelle Bild VB eine vergrößerte Darstellung des vom Anzeigeelement 11 angezeigten Bildes. Hier sind symbolisch eine Geschwindigkeitsbegrenzung, die aktuelle Fahrzeuggeschwindigkeit sowie Navigationsanweisungen dargestellt. So lange sich das Auge 61 innerhalb der durch ein Rechteck angedeuteten Eyebox 62 befindet, sind alle Elemente des virtuellen Bildes für das Auge 61 sichtbar. Befindet sich das Auge 61 außerhalb der Eyebox 62, so ist das virtuelle Bild VB für den Betrachter nur noch teilweise oder gar nicht sichtbar. Je größer die Eyebox 62 ist, desto weniger eingeschränkt ist der Betrachter bei der Wahl seiner Sitzposition.

Die Krümmung des gekrümmten Spiegels 22 dient zum einen dazu, den Strahlengang aufzubereiten und somit für ein größeres Bild und eine größere Eyebox 62 zu sorgen. Zum anderen gleicht die Krümmung eine Krümmung der Windschutzscheibe 31 aus, sodass das virtuelle Bild VB einer vergrößerten Wiedergabe des vom Anzeigeelement 11 dargestellten Bildes entspricht. Der gekrümmte Spiegel 22 ist mittels einer Lagerung 221 drehbar gelagert. Die dadurch ermöglichte Drehung des gekrümmten Spiegels 22 ermöglicht ein Verschieben der Eyebox 62 und somit eine Anpassung der Position der Eyebox 62 an die Position des Auges 61. Der Faltspiegel 21 dient dazu, dass der vom Strahlenbündel SB1 zurückgelegte Weg zwischen Anzeigeelement 11 und gekrümmtem Spiegel 22 lang ist, und gleichzeitig die Optikeinheit 2 dennoch kompakt ausfällt. Die Optikeinheit 2 wird durch eine transparente Abdeckung 23 gegen die Umgebung abgegrenzt. Die optischen Elemente der Optikeinheit 2 sind somit beispielsweise gegen im Innenraum des Fahrzeugs befindlichen Staub geschützt. Auf der Abdeckung 23 befindet sich weiterhin eine optische Folie 24 oder eine Beschichtung, die einfallendes Sonnenlicht SL daran hindern soll, über die Spiegel 21, 22 auf das Anzeigeelement 11 zu gelangen. Dieses könnte sonst durch eine dabei auftretende Wärmeentwicklung vorübergehend oder auch dauerhaft geschädigt werden. Um dies zu verhindern, wird beispielsweise ein Infrarotanteil des Sonnenlichts SL mittels der optischen Folie 24 ausgefiltert. Ein Blendschutz 25 dient dazu, von vorne einfallendes Licht abzuschatten, sodass es nicht von der Abdeckung 23 in Richtung Windschutzscheibe 31 reflektiert wird, was eine Blendung des Betrachters hervorrufen könnte. Außer dem Sonnenlicht SL kann auch das Licht einer anderen Störlichtquelle 64 auf das Anzeigeelement 11 gelangen.

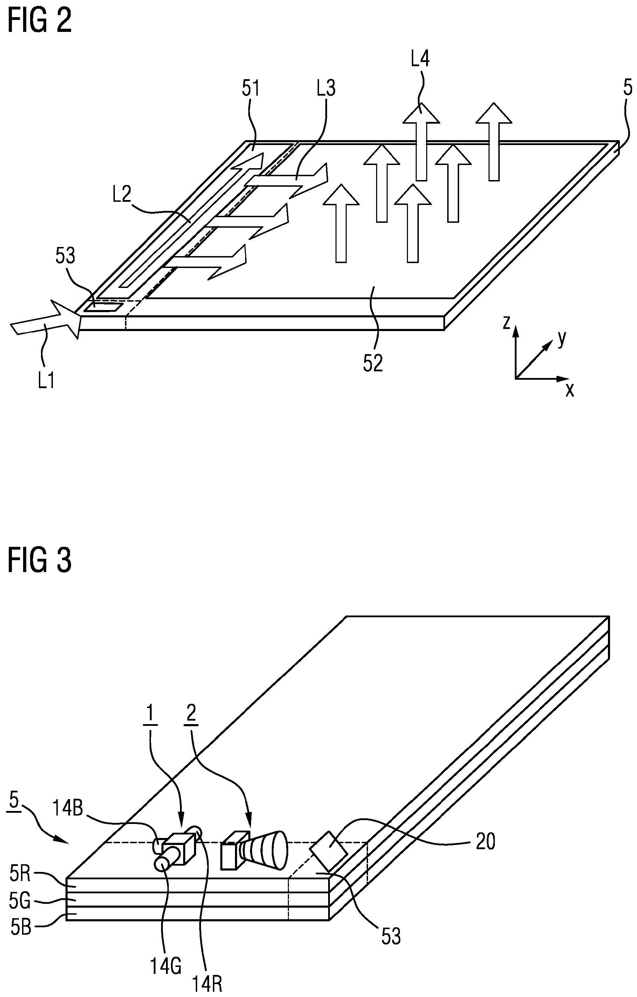

Fig. 2 zeigt in schematischer räumlicher Darstellung einen Lichtwellenleiter 5 mit zweidimensionaler Vergrößerung. Im unteren linken Bereich erkennt man ein Einkoppelhologramm 53, mittels dessen von einer nicht dargestellten bildgebenden Einheit kommendes Licht L1 in den Lichtwellenleiter 5 eingekoppelt wird. In diesem breitet es sich in der Zeichnung nach rechts oben aus, entsprechend dem Pfeil L2. In diesem Bereich des Lichtwellenleiters 5 befindet sich ein Falthologramm 51, das ähnlich wie viele hintereinander angeordnete teildurchlässige Spiegel wirkt, und ein in Y-Richtung verbreitertes, sich in X-Richtung ausbreitendes Lichtbündel erzeugt. Dies ist durch drei Pfeile L3 angedeutet. In dem sich in der Abbildung nach rechts erstreckenden Teil des Lichtwellenleiters 5 befindet sich ein Auskoppelhologramm 52, welches ebenfalls ähnlich wie viele hintereinander angeordnete teildurchlässige Spiegel wirkt, und durch Pfeile L4 angedeutet Licht in Z-Richtung nach oben aus dem Lichtwellenleiter 5 auskoppelt. Hierbei erfolgt eine Verbreiterung in X-Richtung, sodass das ursprüngliche einfallende Lichtbündel L1 als in zwei Dimensionen vergrößertes Lichtbündel L4 den Lichtwellenleiter 5 verlässt.

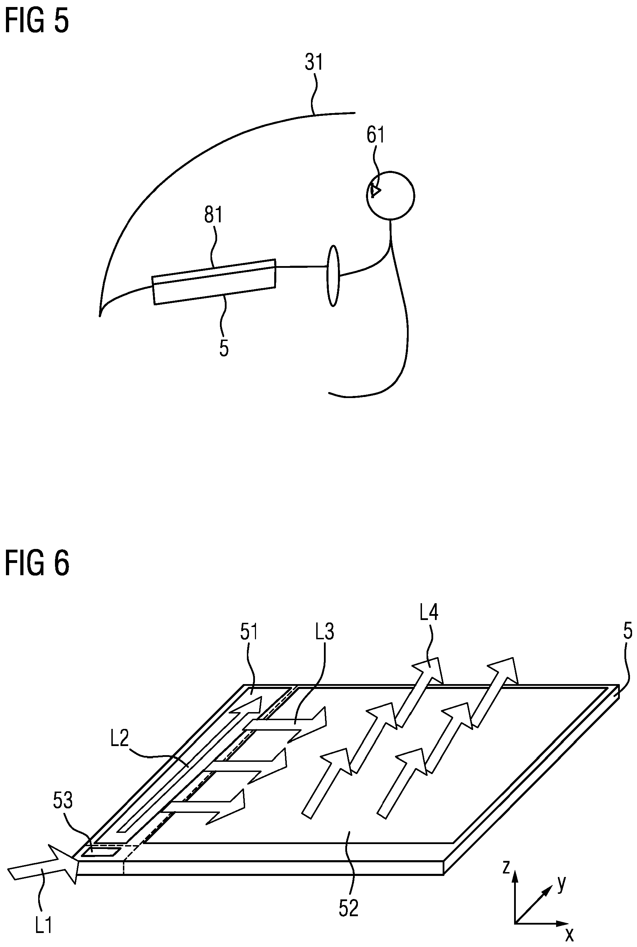

Fig. 6 zeigt in schematischer Darstellung einen zu Fig.2 alternativen Lichtwellenleiter mit zweidimensionaler Vergrößerung. Hier ist das Auskoppelhologramm 52 so ausgebildet, dass es Licht nicht senkrecht zur Oberfläche des Lichtwellenleiters 5, sondern in einem Winkel zur Z-Richtung auskoppelt, wie durch die Pfeile L4 dargestellt. Damit lässt sich der Lichtwellenleiter 5 entsprechend dem vorhandenen Bauraum anordnen, ohne dass auf einen senkrechten Austritt des in zwei Dimensionen vergrößerten Lichtbündels Rücksicht zu nehmen ist.

Fig. 3 zeigt in räumlicher Darstellung ein Head-Up-Display mit drei Lichtwellenleitern 5R, 5G, 5B, die übereinanderliegend angeordnet sind und für je eine Elementarfarbe Rot, Grün und Blau stehen. Sie bilden gemeinsam den Lichtwellenleiter 5. Die in dem Lichtwellenleiter 5 vorhandenen Hologramme 51, 52, 53 sind wellenlängenabhängig, sodass jeweils ein Lichtwellenleiter 5R, 5G, 5B für eine der Elementarfarben verwendet wird. Oberhalb des Lichtwellenleiters 5 sind ein Bildgenerator 1 und eine Optikeinheit 2 dargestellt. Die Optikeinheit 2 weist einen Spiegel 20 auf, mittels dessen das vom Bildgenerator 1 erzeugte und von der Optikeinheit 2 geformte Licht in Richtung des jeweiligen Einkoppelhologramms 53 umgelenkt wird. Der Bildgenerator 1 weist drei Lichtquellen 14R, 14G, 14B für die drei Elementarfarben auf. Man erkennt, dass die gesamte dargestellte Einheit eine im Vergleich zu ihrer lichtabstrahlenden Fläche geringe Gesamtbauhöhe aufweist.

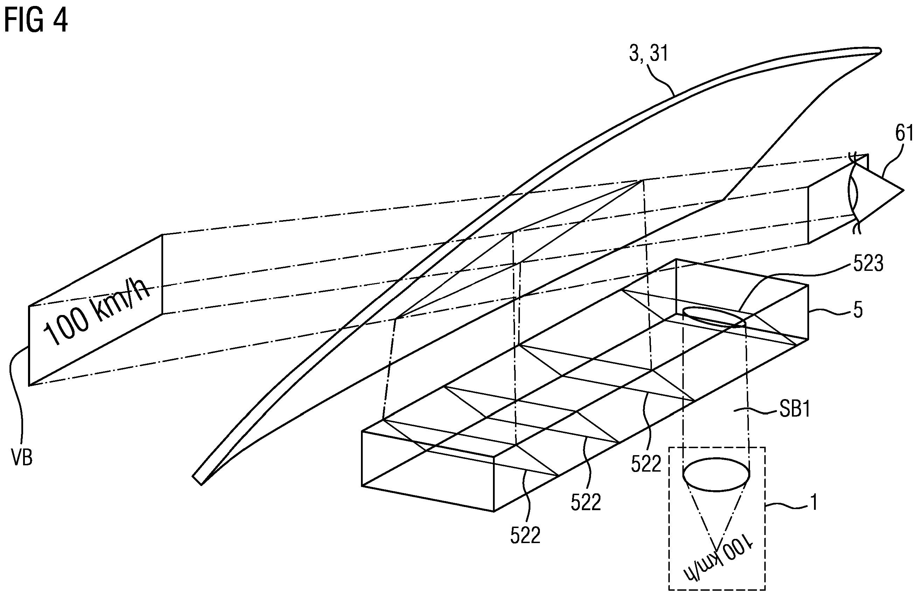

Fig. 4 zeigt ein Head-Up-Display in einem Kraftfahrzeug ähnlich zu Fig. 1, hier allerdings in räumlicher Darstellung und mit einem Lichtwellenleiter 5. Man erkennt den schematisch angedeuteten Bildgenerator 1, der ein paralleles Strahlenbündel SB1 erzeugt, welches mittels der Spiegelebene 523 in den Lichtwellenleiter 5 eingekoppelt wird. Die Optikeinheit ist der Einfachheit halber nicht dargestellt. Mehrere Spiegelebenen 522 reflektieren jeweils einen Teil des auf sie auftreffenden Lichts Richtung Windschutzscheibe 31, der Spiegeleinheit 3. Von dieser wird das Licht Richtung Auge 61 reflektiert. Der Betrachter sieht ein virtuelles Bild VB über der Motorhaube bzw. in noch weiterer Entfernung vor dem Kraftfahrzeug.

Fig. 5 zeigt schematisch ein Head-Up-Display mit Lichtwellenleiter 5 und einer Entspiegelung als Blendschutzelement 81, eine Windschutzscheibe 31 und einen Betrachter mit Auge 61. Der Lichtwellenleiter 5 ist hier direkt am Blendschutzelement 81 angeordnet.

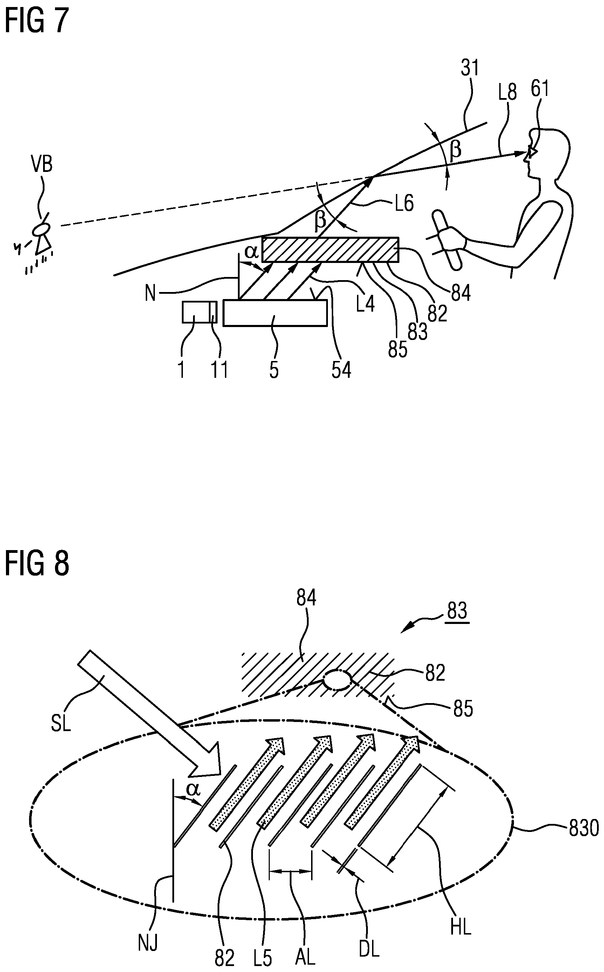

Fig.7 zeigt ein Gerät bei dem ein Lichtwellenleiter 5 entsprechend Fig.6 Verwendung findet. Man erkennt den Bildgenerator 1 mit Anzeigeelement 11 und den Lichtwellenleiter 5, aus dem Licht L4 in einem Winkel α zur Normalen N auf der Lichtaustrittsfläche 54 des Lichtwellenleiters 5 austritt, wobei der Winkel α größer 0° ist. Das austretende Licht L4 trifft auf die Lichteintrittsfläche 85 einer Jalousie 83, deren Lamellen 82 parallel zum austretenden Licht L4 angeordnet sind, sodass dieses die Zwischenräume 84 zwischen den Lamellen 82 ungehindert passieren kann. Das aus der Jalousie 83 austretende Licht L6 trifft unter einem Winkel β auf die Windschutzscheibe 31 und wird von dieser reflektiert und gelangt als Licht L8 ins Auge 61 eines Fahrzeuginsassen, hier des Fahrers. Dieser sieht somit ein virtuelles Bild VB. In diesem Ausführungsbeispiel bildet die Jalousie 83 die Abdeckung der Optikeinheit, ein separates Abdeckelement ist nicht vorgesehen. Die Jalousie 83 kann somit auch in direkten Kontakt mit sich im Fahrzeuginnenraum befindlichen Gegenständen oder Personen gelangen. Eine Beschädigung der Jalousie 83 ist somit nicht ausgeschlossen. Die Jalousie 83 ist daher lösbar angeordnet, sodass sie im Bedarfsfall ohne großen Aufwand demontiert und durch eine neue bzw. eine reparierte Jalousie 83 ersetzbar ist.

Fig.8 zeigt die Jalousie 83 sowie eine Ausschnittsvergrößerung 830. Man erkennt die Lamellen 82, die Licht L5, welches vom Lichtwellenleiter 5 kommt und im wesentlichen parallel zu den Lamellen 82 verläuft, passieren lassen. Störlicht SL, welches nicht parallel zu den Lamellen 82 verläuft, wird von den Lamellen 82 blockiert. Die Lamellen 82 weisen untereinander einen Abstand AL auf und sind um einen Winkel α gegenüber der Normalen NJ zur Lichteintrittsfläche 85 der Jalousie 83 geneigt. Die Lamellen weisen eine Höhe HL und eine Dicke DL auf, wobei die Höhe HL ein Vielfaches der Dicke DL beträgt. Der Winkel α entspricht demjenigen des Lichtaustritts aus dem Lichtwellenleiter 5 wenn dessen Lichtaustrittsfläche 54 und die Lichteintrittsfläche 85 der Jalousie 83 parallel zueinander angeordnet sind. Bei nichtparalleler Anordnung sind diese Winkel entsprechend umzurechnen. Der Winkel α hängt unter anderem von der Position des Fahrers und dessen Blickwinkel ab. Für unterschiedliche Fahrzeugtypen bzw. unterschiedliche Neigungen der Windschutzscheibe 31 ist unter anderem der Abstand AL anzupassen. Die Lamellen 82 sind vorzugsweise nichtreflektierend ausgelegt, also im wesentlichen schwarz. Sind die Lamellen verkippbar angeordnet, ist also der Winkel α im Betrieb variabel einstellbar, so lassen sich diese auf unterschiedliche Positionen der Eyebox bzw. auf unterschiedliche Positionen des Auges 61 innerhalb der Eyebox einstellen. Dies setzt voraus, dass das vom Lichtwellenleiter 5 kommende Licht einen gewissen Winkelbereich abdeckt, sodass für jeden eingestellten Winkel α auch Lichtstrahlen an den Lamellen ankommen, die parallel zu diesen ausgerichtet sind, und diese somit passieren.

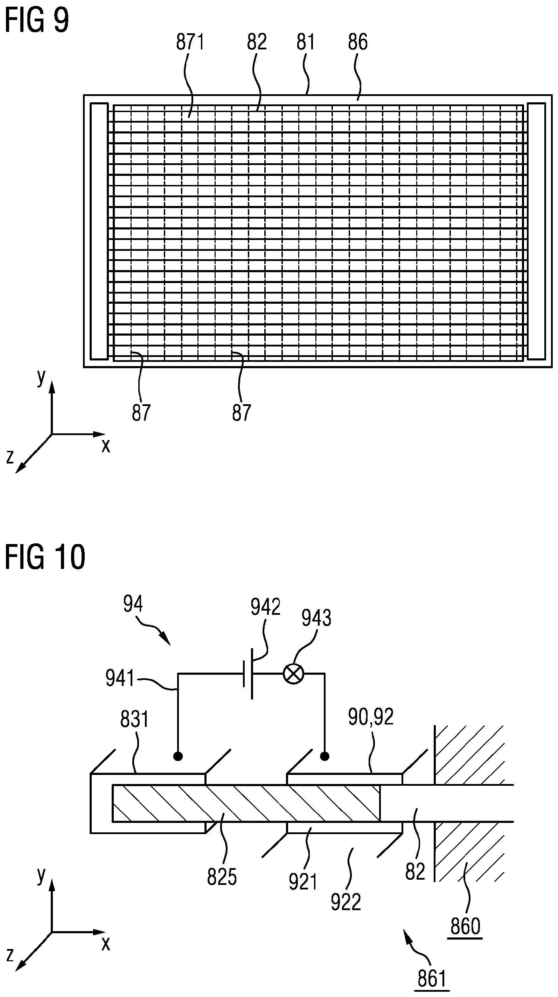

Fig.9 zeigt eine Schnittdarstellung eines Blendschutzelements 81 in Draufsicht. Die Lamellen 82 verlaufen zueinander parallel durch den Sichtbereich 860, durch den das vom Lichtwellenleiter 5 kommende Licht L5 das Blendschutzelement 81 durchläuft. Die Lamellen 82 sind in x-Richtung an ihrem beiden Enden in einem außerhalb des Sichtbereichs 860 liegenden Befestigungsbereich 861 befestigt. Der Befestigungsbereich 861 ist hier nur schematisch als schwarze Fläche dargestellt, Details zur Befestigung der Lamellen 82 in diesem Bereich sind weiter unten beschrieben.

Fig.10 zeigt eine Lösung zur Defektdetektion von Lamellen, die nicht unter die Definition des Anspruchs 1 fällt. Eine Lamelle 82 der Jalousie 83 ist an einer Vorspanneinrichtung 831 befestigt, die als Haltemechanismus für die Lamelle 82 dient. Die Lamelle 82 erstreckt sich in der Abbildung nach rechts, verläuft an einem Verstellmechanismus 92 entlang und tritt anschließend aus dem Befestigungsbereich 861 heraus in den Sichtbereich 860 des Geräts ein. Auf der gegenüberliegenden Seite ist die Lamelle ebenfalls außerhalb des Sichtbereichs 860 an einem entsprechenden Haltemechanismus befestigt, was der Übersichtlichkeit halber hier nicht dargestellt ist. Der Verstellmechanismus 92 dient im Ausführungsbeispiel gleichzeitig auch als Kontaktierungselement 90. Er steht mit einer elektrisch leitfähigen Beschichtung der Lamelle 82 in Kontakt, die in deren Lamellenbereich 825 auf der dem Betrachter abgewandten und einer Anlagefläche 921 des Verstellmechanismus zugewandten Seite angeordnet ist. Die Vorspanneinrichtung 831 und der Verstellmechanismus 92 sind elektrisch leitfähig ausgebildet oder mit entsprechenden elektrisch leitenden Elementen versehen, was hier der Einfachheit halber nicht dargestellt ist. Beide sind mit einer Auswerteschaltung 94 elektrisch verbunden. Dies ist schematisch mittels elektrischer Leitungen 941, einer Batterie 942 und einem Lämpchen 943 angedeutet. Solange die Lamelle 82 unter mechanischer Spannung steht und somit an der Anlagefläche 921 anliegt, ist der elektrische Stromkreis geschlossen, das Lämpchen 943 leuchtet. Reißt die Lamelle 82 verliert sie mechanische Spannung, liegt nicht mehr an der Anlagefläche 921 an, und der elektrische Stromkreis ist nicht mehr geschlossen. Ein nicht leuchtendes Lämpchen 943 weist auf den detektierten Defekt hin. Die Anlagefläche 921 ist in der Abbildung senkrecht stehend dargestellt. Es ist vorgesehen, dass sie mittels des Verstellmechanismus auch schräggestellt werden kann, womit sich auch der Anstellwinkel der Lamelle 82 entsprechend ändert.

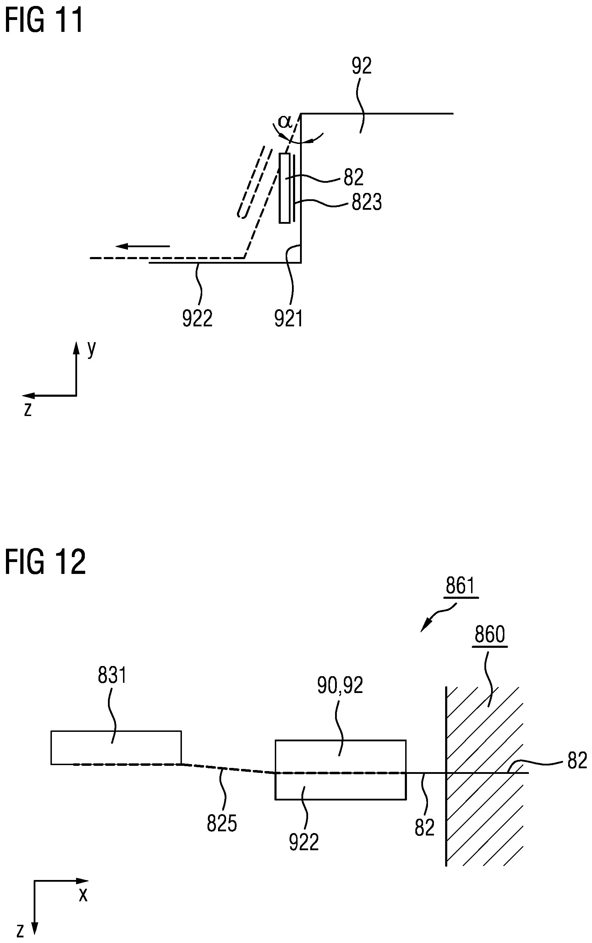

Fig.11 zeigt einen Verstellmechanismus 92 in schematischer Seitenansicht. Man erkennt die Anlagefläche 921, an der die Lamelle 82 mit der an ihrer der Anlagefläche 921 zugewandten Seite angeordneten elektrisch leitfähigen Beschichtung 823 anliegt. Die Anlagefläche 921 ist in dieser Darstellung an ihrer Unterseite mit einer Verschiebefläche 922 in Kontakt. Die Verschiebefläche 922 lässt sich verschieben. Eine Verschiebung nach links ist gestrichelt dargestellt. Dabei bewegt sich das untere Ende der Anlagefläche 921 ebenfalls nach links, währen ihr oberes Ende unverschoben bleibt. Die Anlagefläche 921 weist nun eine Verkippung um den Winkel α zur Senkrechten auf. Die an ihr anliegende Lamelle 82 ist in der gestrichelten Darstellung durch ihre Anlage an der Anlagefläche 921 ebenfalls um den Winkel α verkippt.

Fig.12 zeigt die Lösung der Fig.10 in Draufsicht. Man erkennt dass die Vorspanneinrichtung 831 und der Verstellmechanismus 92 etwas zueinander versetzt angeordnet sind. Die Lamelle 82 weist somit in ihrem Lamellenbereich 825 einen Versatz auf. Man erkennt in diesem Lamellenbereich 825 die elektrisch leitfähige Beschichtung 823, die an ihrer der Vorspanneinrichtung 831 zugewandten Seite angeordnet ist.

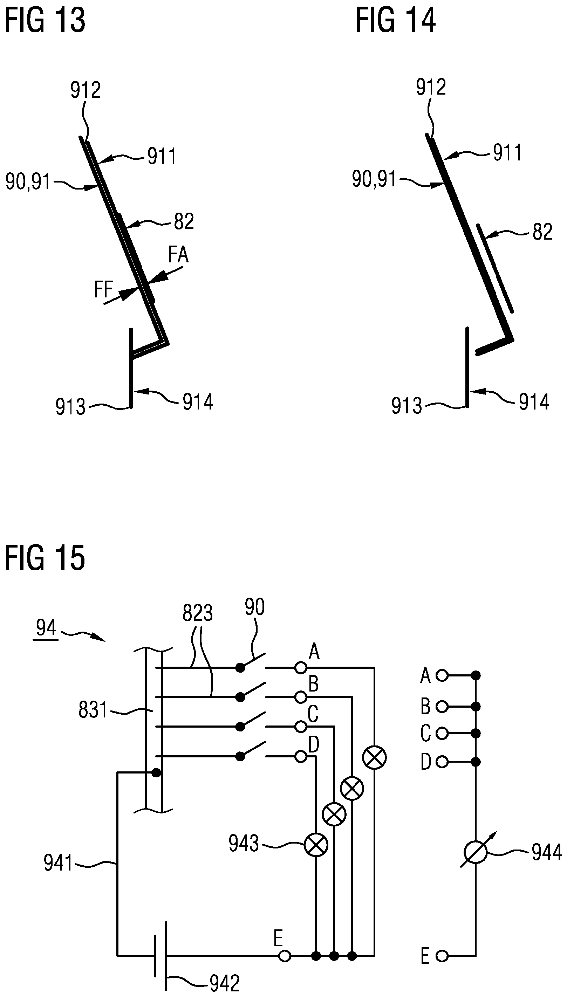

Fig.13 zeigt eine erfindungsgemäße Lösung mit einer Feder 91 als Kontaktierungselement 90. Die Feder 91 ist mit einer elektrisch leitfähigen Schicht 911 versehen, die einerseits mit einer ersten elektrische Kontaktierung verbunden ist und andererseits bei Anlage an einen elektrisch leitfähigen Anschlagpol 914 mit einer zweiten Kontaktierung 913. In dieser Abbildung wird die Feder 91 von der an ihr anliegenden Lamelle 82 mit einer Anpresskraft FA beaufschlagt, die größer ist als die Federkraft FF, wodurch die Feder 91 an den Anschlagpol 914 gedrückt wird.

Fig.14 zeigt die erfindungsgemäße Lösung mit einer Feder 91 aus der vorhergehenden Abbildung, hier allerdings mit einer Lamelle 82, die an einer hier nicht dargestellten Stelle gerissen ist, und somit nicht mehr unter Vorspannung steht. Sie liegt daher nicht mehr an der Feder 91 an, diese befindet sich in ihrem entspannten Zustand, in dem sie vom Anschlagpol 914 getrennt ist. Der elektrische Stromkreis ist somit offen.

Der durch die Feder 91 und den Anschlagpol 914 gebildete elektrische Schalter ist gemäß einer ersten Variante zwischen einer Vorspanneinrichtung 831 und einem Verstellmechanismus 92 angeordnet. Im Vergleich zur in Fig.10 gezeigten Ausführung ist dann die Auswerteschaltung 94 entsprechend an Feder 91 und Anschlagpol 914 anzuschließen, eine elektrische Leitfähigkeit der Lamelle 82 ist in diesem Fall nicht erforderlich. Die Lamelle 82 liegt in ihrem Lamellenbereich 825 an der Feder 91 an.

In einer anderen Variante wird die Lamelle 82 mittels des Schalters gespannt. Die Feder 91 dient in diesem Fall als Vorspanneinrichtung. Reißt die Lamelle 82, schließt der Schalter wiederum.

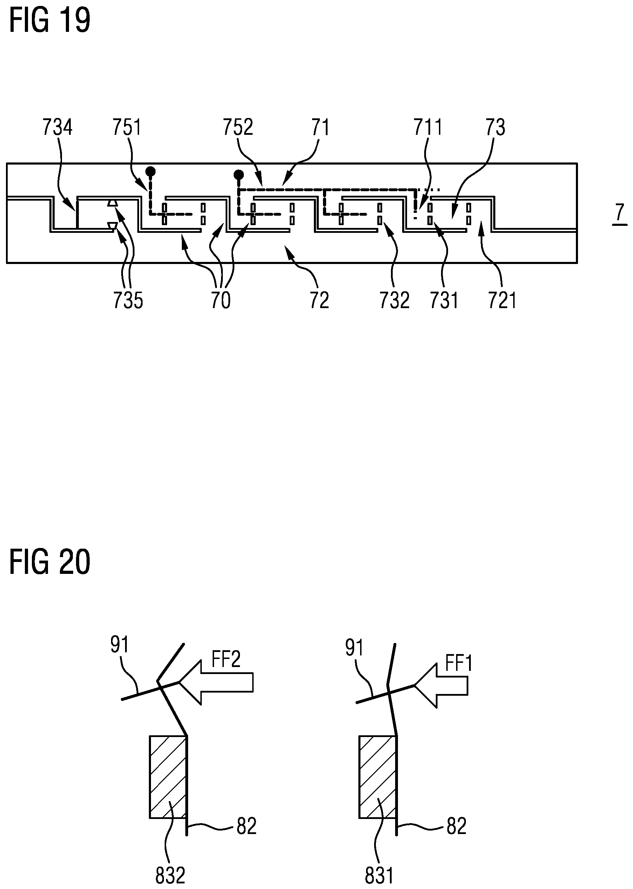

Fig.20 zeigt diese Ausführungsvarianten schematisch. Man erkennt im rechten Teil die an der Vorspanneinrichtung 831 befestigte Lamelle 82 in Draufsicht, die an der Feder 91 anliegt. Die Feder 91 erstreckt sich im wesentlichen senkrecht zur Zeichenebene, ist hier aber auch mit ihren oberhalb und unterhalb der Zeichenebene liegenden Anteilen angedeutet. Die Feder übt eine Federkraft FF1 auf die Lamelle 82 aus. Der elektrische Schalter wird durch die gespannte Lamelle 82 offengehalten. Die Spannung der Feder 91 erfolgt über die Lamelle 82 und die Lamelle 82 wird nicht oder nahezu nicht aus der Geraden heraus gespannt. Die Soll-Draufsicht der Lamelle 82 ist eine gerade Linie. Wenn überhaupt, dann tritt nur eine minimale Ablenkung wie hier übertrieben dargestellt auf, wohingegen die Ablenkung in der linken Variante genutzt und forciert wird. Im linken Teil der Fig.20 ist eine Halteeinrichtung 832 anstatt der zuvor beschriebenen Vorspanneinrichtung 831 angeordnet. Die Vorspannung erfolgt durch die Feder 91, die hier eine durch einen längeren Pfeil angedeutete größere Federkraft FF2 auf die Lamelle 82 ausübt, welche zum Spannen der Lamelle 82 dient. Die Lamelle 82 wird somit mittels des Schalters gespannt. Die Spannung erfolgt über den Schalter und die Lamelle 82 wird dadurch bewusst aus der Geraden heraus gespannt bzw. gezogen. Die Soll- Draufsicht auf die Lamelle 82 ist somit keine gerade Linie.

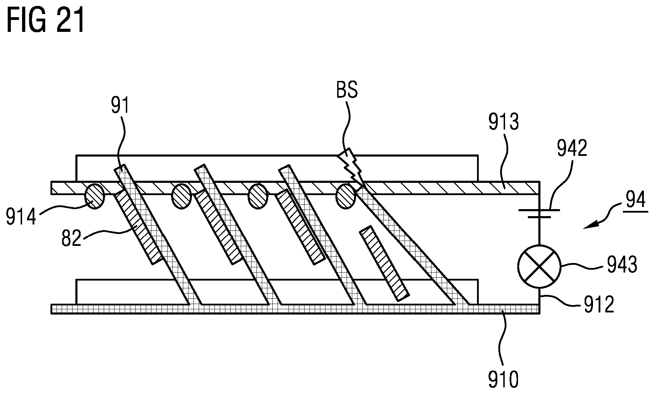

Fig.21 zeigt eine weitere Ausführung in schematischer Darstellung. Man erkennt die Lamellen 82 und die an ihnen anliegenden Federn 91. Die Federn 91 bestehen vorzugsweise aus Metall und sind mit einer gemeinsamen Basis 910 verbunden. Die Basis 910 ist mit einer Auswerteschaltung 94 verbunden. Anschlagpole 914 sind mit einer gemeinsamen Kontaktierung 913 der Auswerteschaltung verbunden. Die drei links dargestellten Lamellen 82 sind intakt, sie setzen den entsprechenden Federn 91 eine Kraft entgegen, die ausreicht, die jeweilige Feder 91 vom zugehörigen Anschlagpol 914 entfernt zu halten. Die durch jeweilige Feder 91 und zugehörigen Anschlagpol 914 gebildeten Schalter sind somit offen. Die rechte Lamelle 82 ist defekt, sie kann der entsprechenden Feder 91 keine ausreichende Kraft entgegensetzen, sodass diese am zugehörigen Anschlagpol 914 zur Anlage kommt, und den Stromkreis schließt. Dies ist mittels eines stilisierten Blitzes BS angedeutet.

Fig.15 zeigt schematisch eine elektrische Auswerteschaltung 94 in zwei Varianten. Eine Batterie 942 ist mittels einer elektrischen Leitung 941 mit der Vorspanneinrichtung 831 elektrisch verbunden. Die Vorspanneinrichtung 831 ist selbst elektrisch leitfähig oder weist elektrische Verbindungen zu den Lamellen 82 und deren elektrisch leitfähiger Beschichtung 823 auf. Schematisch sind hier die Beschichtungen 823 von vier hier selbst nicht dargestellten Lamellen 82 gezeigt. Die entsprechenden Kontaktierungselement 90 sind als elektrischer Schalter dargestellt. In der ersten Variante ist jedes der Kontaktierungselemente 90 mit einem Lämpchen 943 verbunden. Ein Defekt jeder einzelnen der Lamellen lässt sich somit detektieren. Im rechten Teil der Abbildung ist eine alternative Variante gezeigt, bei der alle Kontaktierungselement 90 mit einem einzigen Messgerät 944 verbunden sind. Ist eines oder mehrere der Kontaktierungselemente 90 geöffnet, weil die entsprechende Lamelle 82 gerissen ist, so ändert sich der Stromfluss durch das Messgerät 944, ein Defekt wird detektiert. Auch wenn in dieser Variante nicht detektiert wird, welche Lamelle 82 gerissen ist, so dient die Defektdetektion dennoch dazu, gegebenenfalls die gesamte Jalousie 83 gegen eine mit intakten Lamellen 82 auszutauschen.

Die Erfindung betrifft mit anderen Worten folgendes: Eine Entspiegelung erfolgt in Head-Up-Displays über eine sogenannte Strahlfalle (englisch: Glaretrap) als Blendschutzelement 81 mit einer gebogenen Folie. Diese Konstruktion hat eine Mindest-Einbautiefe entsprechend der Folienkrümmung zur Folge. Eine Entspiegelung von Head-Up-Displays, die die Windschutzscheibe 31 als Spiegelelement bzw. Projektionsfläche nutzen, erfolgt mittels Lamellen 82 bzw. einer Gitterstruktur als abschließender Baugruppe, siehe beispielsweise Fig.5. Insbesondere für Head-Up-Displays mit Lichtwellenleiter 5 im flachen Verbau wird eine Lösung zur Entspiegelung benötigt, da flache Glasbauteile direkt unter der Windschutzscheibe 31 besonders anfällig für störende Reflexionen sind. Diese Lösung ist vorzugsweise winkelverstellbar, um Abschattungen in der Eyebox 62 zu reduzieren. Es sind Lamellen 82 zur Entspiegelung vorgesehen. Eine solche Lösung erfordert eine Lamellenrißdetektion zum Schutz des Fahrers vor Reflektionen.

Eine mögliche Beschädigung einer oder mehrerer Lamellen 82 muss aus Sicherheitsgründen vom Fahrzeug sowohl vor als auch während der Fahrt detektiert und an den Fahrer zu dessen Schutz vor möglichen Reflektionen zurückgemeldet werden. Bislang liegt keine gesicherte Lösung vor, um einen Lamellenriss zu detektieren. Die Lamellen 82 sind direkt hinter der Windschutzscheibe 31 verbaut, sodass hier auch hohe thermische Belastungen, beispielsweise durch Sonneneinstrahlung, auftreten können. Die Baugruppe mit den Lamellen 82 befindet sich im Griffbereich des Fahrers und ist zudem Putz- und/oder Reinigungsszenarien ausgesetzt. Eine Beschädigung der Lamellen, die zu einem Lamellenabriss führen kann, kann somit nicht mit ausreichender Sicherheit ausgeschlossen werden. Eine Detektion und Warnung ist somit aus Sicherheitsgründen erforderlich.

Gemäß zumindest einer Variante der Erfindung sind Lamellen 82 jeweils durch Haltemechanismen sie die Vorspanneinrichtung 831 befestigt und zwischen den Haltemechanismus gespannt. Zwischen den Haltemechanismen werden Verstellmechanismen 92 eingesetzt, um die Winkelverstellbarkeit der Lamellen 82 sicherzustellen.

Als Haltemechanismen können in einer Ausführung beispielsweise die in den folgenden Abbildungen beschriebenen Vorspanneinrichtungen 7,7' eingesetzt werden. Diese Ausführung vereint Halterung der Lamellen 82, Vorspannung der Lamellen 82 und Einstellung des Anstellwinkels α der Lamellen 82 in einem Bauteil. Zur Defektdetektion wird die weiter oben beschriebene Ausführung des Kontaktierungselements 90 als Feder 91 angewendet.

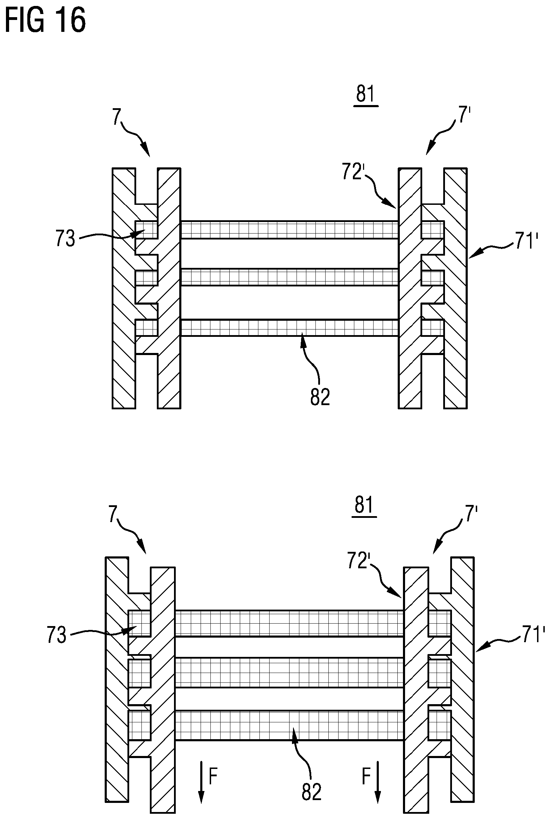

Fig. 16 zeigt ein Blendschutzelement 81 in Draufsicht, im unteren Teil der Abbildung mit und im oberen Teil der Abbildung ohne Kraftausübung. Das Blendschutzelement 81 weist links eine als Feder ausgebildete Vorspanneinrichtung 7 und rechts eine entsprechende Vorspanneinrichtung 7' auf. Diese weisen erste Ebenen 71,71' und zweite Ebenen 72,72' auf. Lamellen 82 sind zwischen den Vorspanneinrichtungen 7,7' gespannt. In der gezeigten Ausführungsform sind die Lamellen 82 an ihren Enden an Übergangsschrägen 73 befestigt, die in der Abbildung daher nicht sichtbar sind. Man erkennt im oberen Bereich der Abbildung, dass die Ebenen 71, 71' und 72, 72' nicht gegeneinander verschoben sind. Im unteren Bereich der Abbildung wirkt einer Kraft F auf die Ebenen 72, 72', wodurch diese gegenüber den ersten Ebenen 71, 71' verschoben werden. Die Übergangsschrägen 73 ändern dabei ihren Winkel und damit auch die Lamellen 82.

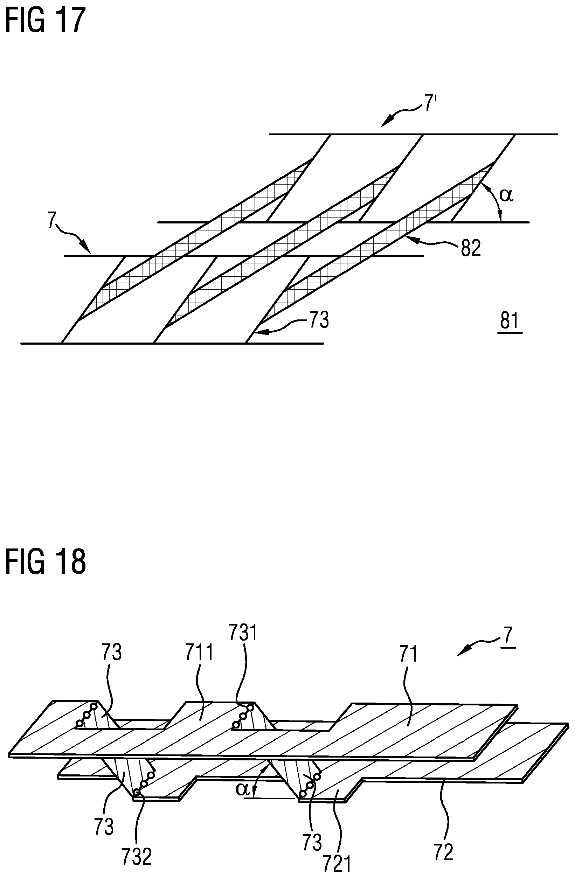

Fig. 17 zeigt ein in der vorhergehenden Abbildung gezeigtes Blendschutzelement 81 in schematischer räumlicher Ansicht. Man erkennt zwei nur durch Linien stilisierte Vorspanneinrichtungen 7, 7' mit ihren Übergangsschrägen 73, an denen die Lamellen 82 befestigt sind. Auch der Anstellwinkel α ist gezeigt.

Fig.18 zeigt eine schematische räumliche Darstellung einer Vorspanneinrichtung 7 wie in den beide vorhergehenden Abbildungen gezeigt in ihrer dreidimensionalen Form. Man erkennt die räumlich voneinander getrennten Ebenen 71,72. Die erste Ebene 71 befindet sich oberhalb der zweiten Ebene 72. Die Übergangsschrägen 73 verlaufen schräg von links oben nach rechts unten. Oben sind sie mit Stegen 711 verbunden, an ihrem unteren Ende mit Stegen 721. Im Übergangsbereich von Steg 711, 721 und Übergangsbereich 73 befindet sich eine Perforation 731,732. Wird die obere Ebene 71 durch eine Kraftausübung nach links verschoben, so wird der Anstellwinkel α kleiner, die Übergangsschräge 73 ist weniger stark geneigt und somit auch die mit ihr in Kontakt stehende, hier nicht gezeigte jeweilige Lamelle. Wird die obere Ebene 71 durch eine Kraftausübung nach rechts verschoben, so wird der Anstellwinkel α größer, die Übergangsschrägen 73 stehen steiler und somit auch die entsprechenden Lamellen. Durch die einstückige Ausführung der Feder 7 ist gewährleistet, dass die Übergangsschrägen 73 in diesem Fall immer parallel zueinander sind, also den gleichen Anstellwinkel α aufweisen.

Eine elektrisch leitende Beschichtung 823 wird gemäß einer Ausführungsform ausschließlich auf der Rückseite der Lamelle 82, also auf ihrer dem Verstellmechanismus 92 zugewandten Seite, aufgebracht. Die Beschichtung 823 befindet sich somit außerhalb des Sichtbereichs 860 des insbesondere als Waveguide Head-Up-Display ausgebildeten Geräts. Damit wird eine elektrische leitende Verbindung zwischen der Vorspanneinrichtung 831,7 als Haltemechanismus und dem als Verstellmechanismus 92 oder als Feder 91 ausgebildeten Kontaktierungselement 90 sichergestellt. Diese elektrisch leitende Verbindung kann fahrzeugseitig überprüft werden. Je nach verwendeter Auswerteschaltung 94 erfolgt eine einzelne oder paketweise Überwachung der Lamellen 82 auf Lamellenriss. Es wird entweder ein Abriss oder eine anteilige Veränderung des Widerstands detektiert.

Im Fall eines Lamellenrisses erfolgt ein Kontaktverlust der Lamelle 82 vom Kontaktierungselement 90, das beispielsweise als Feder 91 oder als Verstellmechanismus 92 ausgebildet ist. Der Kontaktverlust kann durch leichte Verschiebung des Haltemechanismus, beispielsweise der Vorspanneinrichtung 831, 7, zum Kontaktierungselement 90, beispielsweise Feder 91 oder Verstellmechanismus 92, forciert werden. Zur Absicherung des Kontaktverlusts bei Lamellenriss können die Geometrieeigenschaften angepasst werden, beispielsweise durch geeignet angeordnete Sicken.

In einer weiteren Ausführungsvariante kann sowohl der Haltemechanismus als auch der das Kontaktierungselement 90, also Feder 91 oder Verstellmechanismus 92, partiell isolierend ausgeführt werden. Dies kann beispielsweise durch Aufbringung einer isolierend wirkenden Schicht in Kombination mit einer partiellen Beschädigung der isolierenden Beschichtung erreicht werden.

Die elektrische Kontaktierung im Haltemechanismus kann beispielsweise, wie zu Fig. 19 beschrieben, durch Verwendung eines partiell aufgetragenen elektrisch leitfähigen Klebers 751,752 erfolgen. Ein entsprechender Kleber kann auch vorteilhaft bei dem Kontaktierungselement 90 vorgesehen sein.

Fig. 19 zeigt eine als Feder ausgebildete Vorspanneinrichtung 7 in Draufsicht. Die Vorspanneinrichtung 7 ist hier in ihrer zweidimensionalen Form dargestellt, die sie aufweist, bevor sie bei der Produktion in ihrer dreidimensionale Form gebracht wird. Man erkennt die erste Ebene 71 und die zweite Ebene 72, die in der zweidimensionalen Form noch beide in derselben Ebene, hier der Zeichenebene, liegen. Von der ersten Ebene 71 erstrecken sich Stege 711 in Richtung der zweiten Ebene 72. Von der zweiten Ebene 72 erstrecken sich Stege 721 in Richtung der ersten Ebene 71. Übergangsschrägen 73 verbinden je einen Steg 711 mit einem Steg 721. Am Übergang zwischen einem Steg 711 der ersten Ebene 71 zur Übergangsschräge 73 ist eine Perforation 731 angeordnet. Am Übergang zwischen einem Steg 721 der zweiten Ebene 72 zur Übergangsschräge 73 ist eine Perforation 732 angeordnet. An dieser Perforation 731,732 bildet sich ein Knick aus, wenn die Feder 7 aus ihrer dargestellten zweidimensionalen Form in ihrer dreidimensionale Form verbracht wird. Die Übergangsschräge 73 steht dann im Winkel zu den Ebenen 71,72 und bildet eine in sich im wesentlichen ebene Fläche zwischen den Perforationen 731,732. Zur Herstellung der Feder der Vorspanneinrichtung 7 wird vorzugsweise ein dünnes, rechteckiges Blech oder eine entsprechende Folie verwendet, das oder die anhand einer Schnittkontur 70 geschnitten, gestanzt oder auf andere geeignete Weise bearbeitet wird. Im linken Teil der Abbildung ist beispielhaft einer Nut 734 gezeigt, die entweder anstatt der Perforation 731 oder zusätzlich zu dieser vorgesehen ist. Ebenfalls sind Randausnehmungen 735 als Alternative zu der Perforation 731 gezeigt. Es versteht sich, dass im Normalfall nur entweder Perforationen 731 oder Nuten 734 oder Randausnehmungen 735 in einer Vorspanneinrichtung 7 vorgesehen sind. Aber auch eine Kombination von zwei oder drei dieser Elemente kann eine sinnvolle Ausgestaltungsform sein.

Beispielhaft sind zwei Varianten eines partiell aufgetragenen elektrisch leitfähigen Klebers 751,752 gezeigt. In einer ersten Variante ist je ein Streifen elektrisch leitfähigen Klebers 751 pro Übergangsschräge 73 aufgetragen, wobei dieser Streifen sich von der Übergangsschräge 73 bis in den Bereich der ersten Ebene 71 erstreckt. Im Bereich der Übergangsschräge 73 steht der Kleber 751 dann in elektrischem Kontakt mit einer hier nicht dargestellten Lamelle 82, im Bereich der Ebene 71 mit einer hier nicht dargestellten Kontaktierung. Vorteilhafterweise sind die Lamelle 82 und/oder die Kontaktierung mittels des Klebers an der Vorspanneinrichtung 7 befestigt. Der Kleber 751 kann sowohl auf die hier dargestellte zweidimensionale Form der Vorspanneinrichtung 7 aufgetragen werden, also bevor sie dreidimensional aufgefaltet wird, und danach mit Lamelle 82 bzw. Kontaktierung in Verbindung gebracht werden. Nach Aushärten des Klebers 751 ist auch die durch diesen gebildete Leiterbahn, die die Lamelle 82 mit der Kontaktierung verbindet, ausgehärtet, ein unerwünschtes Ankleben an andere Bauteile ist dann ausgeschlossen. Der elektrisch leitende Kleber 751 kann auch erst kurz vor Anbringen der Lamelle 82 und/oder der Kontaktierung aufgebracht werden. Dies hat den Vorteil, dass als Kleber 751 ein schnelltrocknender Kleber verwendbar ist, und dass das Hantieren beim Zusammenbau nicht durch ungewolltes Kleben des bereits aufgetragenen aber noch nicht ausgehärteten Klebers verkompliziert wird. In einer zweiten Variante ist ein Streifen elektrisch leitenden Klebers 752 vorgesehen, der sich über einen längeren Abschnitt der ersten Ebene 71 erstreckt und mehrere Abzweige aufweist, die auf je einer Übergangsschräge 73 enden. Auf diese Weise lassen sich mehrere Lamellen 82 im Paket auf Lamellenriss detektieren.

Ein Kontakt der Lamellenoberseite mit einem darauffolgend angeordneten Element des Verstellmechanismus 92 ist durch einseitige Beschichtung der Lamelle 82 mit einer elektrisch leitfähigen Beschichtung 823 ausgeschlossen.

Eine Variante sieht vor, dass die Lamelle 82 im montierten Zustand eine Feder 91 niederdrückt und durch den Anpressdruck die Kontaktierung eines Anschlagpols 914 mit der Feder 91 sicherstellt. Die Federn 91 sind damit nicht fest mit dem Anschlagpol 914 verbunden. Bei einem möglichen Lamellenriss gelangt die Feder 91 durch den fehlenden Anpressdruck in ihre ungespannte Ausgangsposition. Feder 91 und Anschlagpol 911 sind nicht länger kontaktiert.

Eine weitere Variante sieht vor, dass der beispielsweise mittels der Feder 91 realisierte Schalter ohne die Vorspannung der Lamelle 82 bei einem Lamellenriss schließt und durch die Lamellenspannung geöffnet wird. Sobald eine Lamelle 82 reißt, schließt der Kontakt und das Ereignis wird detektiert.

Die notwendige leitfähige Beschichtung 823 der Lamellen 82 wird außerhalb des Sichtbereichs 860 des Blendschutzelements 81 aufgebracht. Damit braucht die Beschichtung 823 keine besonderen optischen Eigenschaften zu erfüllen. Notwendige Eigenschaften zur Blendvermeidung und Erhöhung der Leitfähigkeit, einschließlich Stabilität der Leitfähigkeit über verschiedene Temperaturbereiche, werden somit räumlich getrennt.

Bei Lamellenriß verliert die Lamelle 82 den Kontakt zum Kontaktierungselement 90, beispielsweise der Feder 91 oder dem Verstellmechanismus 92. Damit kann ein eindeutiges digitales An/Aus-Signal detektiert werden, und nicht eine gegebenenfalls nicht eindeutige Veränderung eines Signals, wie es bei anderen Lösungen der Fall ist.

Der relevante elektrische Widerstand des Lamellenbereichs 825 ist gering und signifikant geringer als der Widerstand einer Gesamtlamelle über die volle Länge ohne zusätzliche Beschichtung zur Erhöhung der Leitfähigkeit. Ein weiterer Vorteil der Variante, bei der eine elektrisch leitfähige Beschichtung 823 im Lamellenbereich 825, also außerhalb des Sichtbereichs 860 angeordnet ist, liegt darin, dass durch Sonnenstrahlung hervorgerufene Temperaturänderungen, die sich auf die elektrische Leitfähigkeit auswirken können, oder andere durch Licht hervorgerufene Leitfahigkeitsänderungen keinen oder nur einen geringen Einfluss auf die elektrische Leitfähigkeit eines ausschließlich im Befestigungsbereich 861 angeordneten elektrischen Leiters hat, unabhängig davon ob dieser eine elektrisch leitfähige Beschichtung 823 ist, elektrisch leitfähiges Material der Lamelle 82, oder ein andersartiger elektrischer Leiter.

Die erfindungsgemäße Lösung lässt sich auch anwenden in konventionellen Head-Up-Displays (beispielsweise spiegelbasierten). Hier wird das Blendschutzelement 81 vorzugsweise als abschließende Baugruppe eingesetzt. Die erfindungsgemäße Lösung lässt sich auch anwenden als verstellbare Entspiegelung innerhalb von Baugruppen. Das Blendschutzelement 81 ist dann in die Baugruppe integriert.

## Patentansprüche

1. Gerät zum Generieren eines virtuellen Bildes (VB), mit:
- einem Anzeigeelement (11) zum Erzeugen eines Bildes; und
- einem Blendschutzelement (81), welches als Lamellen (82) aufweisende Jalousie (83) ausgebildet ist, wobei
- die Lamellen (82) außerhalb eines Sichtbereichs (860) des Geräts in einer Vorspanneinrichtung (831) eingespannt sind,
**dadurch gekennzeichnet, dass** die Lamellen (82) an einem Kontaktierungselement (90,91,92) unter Vorspannung anliegen, und
- das Kontaktierungselement (90,91,92) mit einer Auswerteschaltung (94) verbunden ist, welche einen Defekt einer Lamelle (82) detektiert, und das Kontaktierungselement (90) eine Feder (91) ist, die elektrisch leitend ausgebildet ist, die in einem gespannten Zustand beziehungsweise in einem Ruhezustand mit einem Anschlagpol (914) in elektrischer Verbindung steht und im entsprechend anderen Zustand vom Anschlagpol (914) elektrisch getrennt ist.

2. Gerät gemäß Anspruch 1, mit einem Lichtwellenleiter (5, 510, 520) zum Aufweiten einer Austrittspupille, wobei das Blendschutzelement (81) dem Lichtwellenleiter (5) im Strahlengang nachgeordnet ist.

3. Gerät gemäß Anspruch 1 oder 2, wobei die Lamelle (82) zumindest in einem außerhalb des Sichtbereichs (860) des Geräts befindlichen Lamellenbereich (825) elektrisch leitfähig ausgebildet ist.

4. Gerät gemäß Anspruch 3, wobei die Lamelle (82) auf ihrer dem Kontaktierungselement (90,92) abgewandten Seite elektrisch isolierend ausgebildet ist.

5. Gerät gemäß einem der vorhergehenden Ansprüche, wobei Vorspanneinrichtung (831,7) und Kontaktierungselement (90,92) in einer Richtung (x) senkrecht zur längsten Ausdehnung einer Lamelle (82) versetzt angeordnet sind.

6. Gerät gemäß einem der vorhergehenden Ansprüche, wobei das Kontaktierungselement (90) ein Verstellmechanismus (92) zum Verändern des Anstellwinkels (α) ist.

7. Gerät gemäß einem der vorhergehenden Ansprüche, wobei eine elektrische Auswerteschaltung (94) vorgesehen ist, mit der mehrere Lamellen (82) gemeinsam überwacht werden.

8. Gerät gemäß einem der vorhergehenden Ansprüche, wobei die Vorspanneinrichtung (823,7) und/oder das Kontaktierungselement (90,91,92) mit einem elektrisch leitfähigen Kleber (751,752) versehen ist.

## Claims

1. A device for generating a virtual image (VB), having:
- a display element (11) for generating an image; and
- an antiglare element (81), which is configured as a shutter (83) comprising lamellae (82), wherein
- the lamellae (82) are braced in a pretensioning device (831) outside of a visible region (860) of the device,
**characterized in that** the lamellae (82) bear under prestress against a contacting element (90,91,92), and
- the contacting element (90,91,92) is connected to an evaluation circuit (94), which detects a defect of a lamella (82), and the contacting element (90) is a spring (91) with an electrically conductive embodiment, which is electrically connected to a stop terminal (914) in a tensioned state or in a rest state and which is electrically separated from the stop terminal (914) in the corresponding other state.

2. The device as claimed in claim 1, having an optical waveguide (5, 510, 520) for expanding an exit pupil, wherein the anti-glare element (81) is arranged downstream of the optical waveguide (5) in the beam path.

3. The device as claimed in claim 1 or 2, wherein the lamella (82) has an electrically conductive embodiment, at least in a lamella region (825) situated outside of the visible region (860) of the device.

4. The device as claimed in claim 3, wherein the lamella (82) has an electrically insulating embodiment on its side facing away from the contacting element (90,92).

5. The device as claimed in any of the preceding claims, wherein the pretensioning device (831,7) and contacting element (90,92) are arranged offset from one another in a direction (x) perpendicular to the longest extent of a lamella (82).

6. The device as claimed in any of the preceding claims, wherein the contacting element (90) is an adjustment mechanism (92) for changing the angle of incidence (α).

7. The device as claimed in any of the preceding claims, wherein an electrical evaluation circuit (94) is provided, by means of which multiple lamellae (82) are jointly monitored.

8. The device as claimed in any of the preceding claims, wherein the pretensioning equipment (823,7) and/or the contacting element (90,91,92) are/is provided with an electrically conductive adhesive (751,752).

## Revendications

1. Appareil de génération d'une image virtuelle (VB), comportant :
- un élément d'affichage (11) pour générer une image ; et
- un élément de protection contre l'éblouissement (81) conçu comme un store (83) présentant des lamelles (82), dans lequel
- les lamelles (82) sont fixées dans un dispositif de précharge (831) à l'extérieur d'une zone de visualisation (860) de l'appareil,
**caractérisée en ce que** les lamelles (82) sont en appui contre un élément de contact (90, 91, 92) sous précharge, et
- l'élément de contact (90, 91, 92) est connecté à un circuit d'évaluation (94) qui détecte un défaut d'une lamelle (82), et l'élément de contact (90) est un ressort (91) électriquement conducteur, en contact électrique avec un plot d'arrêt (914) dans un état tendu ou dans un état de repos, et isolé électriquement du plot d'arrêt (914) dans l'autre état correspondant.

2. Appareil selon la revendication 1, comprenant un guide d'ondes optique (5, 510, 520) pour dilater une pupille de sortie, dans lequel l'élément de protection contre l'éblouissement (81) est disposé en aval du guide d'ondes optique (5) dans le trajet du faisceau.

3. Appareil selon la revendication 1 ou 2, dans lequel la lamelle (82) est électriquement conductrice au moins dans une zone de lamelle (825) située en dehors du champ de vision (860) de l'appareil.

4. Appareil selon la revendication 3, dans lequel la lamelle (82) est électriquement isolante sur sa face opposée à l'élément de contact (90, 92).

5. Appareil selon l'une des revendications précédentes, dans lequel le dispositif de précharge (831,7) et l'élément de contact (90,92) sont disposés de manière décalée dans une direction (x) perpendiculaire à la plus grande étendue d'une lamelle (82).

6. Appareil selon l'une des revendications précédentes, dans lequel l'élément de contact (90) est un mécanisme de réglage (92) permettant de modifier l'angle d'inclinaison (α).

7. Appareil selon l'une des revendications précédentes, dans lequel un circuit d'évaluation électrique (94) est prévu, avec lequel plusieurs lamelles (82) sont surveillées conjointement.

8. Appareil selon l'une des revendications précédentes, dans lequel le dispositif de précharge (823,7) et/ou l'élément de contact (90, 91, 92) est muni d'un adhésif électriquement conducteur (751, 752).
